## Europäisches Patentamt
## European Patent Office
## Office européen des brevets

(11) Veröffentlichungsnummer: **0 205 882 B1**

# EUROPÄISCHE PATENTSCHRIFT

(45) Veröffentlichungstag der Patentschrift: **18.09.91**

(21) Anmeldenummer: **86106501.9**

(22) Anmeldetag: **13.05.86**

(51) Int. Cl.⁵: **F02M 59/46, F02M 55/04, F02M 57/02, F02M 59/36**

(54) **Kraftstoffeinspritzvorrichtung.**

(30) Priorität: **14.06.85 DE 3521427**

(43) Veröffentlichungstag der Anmeldung:
**30.12.86 Patentblatt 86/52**

(45) Bekanntmachung des Hinweises auf die
Patenterteilung:
**18.09.91 Patentblatt 91/38**

(84) Benannte Vertragsstaaten:
**AT DE FR GB IT**

(56) Entgegenhaltungen:
EP-A- 0 132 798      EP-A- 0 139 400
DE-A- 1 601 984      DE-A- 2 251 125
DE-A- 2 743 244      DE-A- 3 523 536
US-A- 2 421 475      US-A- 2 628 570
US-A- 4 129 256      US-A- 4 392 612

PATENT ABSTRACTS OF JAPAN, Band 8, Nr.
220 (M-330)[1657], 6. Oktober 1984; & JP-A-59
103 960 (NISSAN JIDOSHA K.K.) 15-06-1984

(73) Patentinhaber: **ROBERT BOSCH GMBH**
**Postfach 50**
**W-7000 Stuttgart 1(DE)**

(72) Erfinder: **Buisson, Dominique**
**33 Blvd. Eugène Reguillon**
**F-69100 Villeurbanne(FR)**
Erfinder: **Henry, François**
**81 chemin de Chavril**
**F-69110 Ste-Foy-les-Lyon(FR)**
Erfinder: **Leblanc, Jean**
**25 rue Claude Farrère**
**F-69003 Lyon(FR)**
Erfinder: **Pfeifle, Helmut, Dr., Dipl.-Phys.**
**Sonnenbergstrasse 115**
**W-7000 Stuttgart 1(DE)**
Erfinder: **Pigeroulet, Jean**
**13 rue Pascal**
**F-69100 Villeurbanne(FR)**

## Beschreibung

### Stand der Technik

Die Erfindung geht von einer Kraftstoffeinspritzvorrichtung nach der Gattung des Patentanspruchs 1 aus. Bei einer solchen durch die DE-A-1 601 984 bekannten Kraftstoffeinspritzpumpe ist zwischen einem Pumpenarbeitsraum derselben und einem Kraftstoffeinspritzventil das gattungsgemäße Druckventilschließglied angeordnet, das als Gleichdruckventil arbeitet. Dazu ist der Federraum des Druckventilschließgliedes mit einem Entlastungsraum verbunden, was bei Beginn des Förderhubes des Pumpenkolbens der Kraftstoffeinspritzpumpe ein nur durch die Rückstellfeder des Druckventilschließglieds gesteuerte Ausweichbewegung des Druckventilschließgliedes zuläßt, wodurch die Verbindung zwischen Pumpenarbeitsraum und Einspritzventil freigegeben wird. Bei Beendigung der Einspritzung wird über die Druckschulter des Ventilschließgliedes dieses solange offengehalten, bis der konstruktiv eingestellte Schließdruck in der Einspritzleitung zwischen Pumpenarbeitsraum und Einspritzdüsen erreicht ist. Die Steuerung der Einspritzmenge wird somit nicht, durch unterschiedliche Schluckvolumina gestört, die bei nacheinander folgenden Einspritzvorgängen auftreten könnten.

Durch die US-A-4 392 612 ist ferner eine Kraftstoffeinspritzvorrichtung bekannt, bei der die Füllung des Pumpenarbeitsraumes mit Kraftstoff und die Steuerung der Hochdruckphase mit Hilfe eines druckentlasteten Magnetventils erfolgt derart, daß das Magnetventil eine Verbindungsleitung zum Saugraum schließt, um den Beginn der Hochdruckförderung auszulösen und wieder öffnet zur Beendigung der Hochdruckförderung.

Das Schließglied des Magnetventils ist dabei als Schieber ausgebildet, der von seinen beiden Stirnseiten her druckentlastet ist und eine mit der Verbindungsleitung zum Pumpenarbeitsraum verbundene Ringnut aufweist, die über ein mit einem Ventilsitz zusammenwirkendes Schließteil am Schließglied mit einem Niederdruckkraftstoffraum bei Betätigung des Schließglieds verbunden werden kann. Die der Dichtfläche des Schließteils axial abgewandte Seite am Ventilschließglied ist ständig dem Niederdruck ausgesetzt, während die an die Dichtfläche angrenzende axiale Begrenzungsfläche der Ringnut in der Förderphase des Pumpenkolbens der Kraftstoffeinspritzvorrichtung dem Hochdruck ausgesetzt ist. Obwohl im Prinzip das Ventilschließglied des Magnetventils durch die Ausgestaltung der Ringnut bezüglich der Druckbeaufschlagung Kraft ausgeglichen ist, wirkt doch bei Beginn der Hochdruckphase im Laufe des Schließvorgangs des Ventilschließgliedes eine axiale Kraftkomponente zusätzlich auf die Dichtfläche, was einen entsprechend hohen Schließkraftbedarf verursacht. Der Pumpenarbeitsraum der bekannten Kraftstoffeinspritzvorrichtung ist über eine Einspritzleitung und ein Rückschlagventil mit einem scheibenförmigen, in keiner Vorzugsrichtung belasteten Ventilschließgliedes mit dem Kraftstoffeinspritzventil verbunden.

Diese Ausgestaltung hat den Nachteil, daß der Schließvorgang des kraftstoffeinspritzmengenbestimmenden elektrisch gesteuerten Ventils durch den Druckaufbau im Pumpenarbeitsraum gehindert wird und dieses Ventil durch einen eine hohe Schließkraft erzeugenden Elektromagneten betätigt werden muß. Dies macht das Ventil teuer und zugleich auch in seiner Schaltgeschwindigkeit langsam.

### Vorteile der Erfindung

Die erfindungsgemäße Kraftstoffeinspritzvorrichtung mit den kennzeichnenden Merkmalen des Patentanspruchs 1 hat demgegenüber den Vorteil, daß zum einen das Druckventilschließglied als Gleichdruckventil wirkt und zum anderen das Druckventilschließglied als Ausweichkolben wirkt, mit dessen Hilfe es möglich ist, bei Einspritzbeginn die Druckanstiegsrate so lange gegenüber der geometrisch vorgegebenen Anstiegsrate zu reduzieren, bis das Druckventilschließglied an seinen Anschlag gelangt. Da die Rückseite des Druckventilschließglieds mit einem vom Druck im Pumpenarbeitsraum unabhängigen Druck niedrigen Niveaus beaufschlagt ist, wird die Ausweichbewegung und Ausweichgeschwindigkeit des Druckventilschließglieds letztlich im wesentlichen durch die Kraft der Ventilfeder in Verbindung mit der hochdruckbeaufschlagten Stirnfläche bestimmt.

Damit, daß der Druckanstieg durch die Ausweichbewegung des Druckventilschließglieds verzögert wird, wird das Schließglied des elektrisch gesteuerten Ventils im Moment des Schließens dieses Ventils von einem weniger hohen Druck beaufschlagt, was die Schließgeschwindigkeit erhöht und die notwendige Schließkraft, die das Ventil aufbringen muß, verringert. Zur Erzielung eines schnellen Schaltens des elektrisch gesteuerten Ventils kann dessen Hub und dessen Öffnungsquerschnitt nicht beliebig groß gemacht werden, so daß sich über diese Anfangsphase der Kraftstofförderung bis Spritzbeginn durch Drosselung am Öffnungsquerschnitt ein erhöhter Druck ausbilden kann. Mit Hilfe des Schluckvolumens des Druckventilschließgliedes ist es jedoch möglich, diesen Druckanstieg zu reduzieren, was sich wiederum positiv auf die Schließgeschwindigkeit bzw. die Bauart und Schließenergie für das elektrisch gesteuerte Ventil auswirkt. Diese Wirkung ist insbesondere vorteilhaft bei einer Kraftstoffeinspritzvorrichtung gemäß Anspruch 2, da hier der sich im Pumpenarbeitsraum bis zum eigentlichen Spritzbeginn aufbauende Druck auch auf die Dichtfläche in Öffnungsrichtung des Nadelventils wirken kann. In Anpassung des Schluckvolumens und der Schluckrate des Druckventilschließgliedes an die Bewegungscharakteristik des Schließgliedes des Magnetventils kann die Schließgeschwindigkeit des Magnetventils optimiert und die Schließenergie reduziert werden. Dabei sind der Öffnungsquerschnitt der Entlastungsleitung bei ganz geöffnetem Magnetventil, die Pumpenkolbenförderrate und die druckbeaufschlagten Flächen am Ventilschließglied des Magnetventils, der Haltedruck des Druckventils und der Kraftverlauf des Magnetventils zu berücksichtigen.

Eine vorteilhafte Weiterbildung besteht in der Ausgestaltung gemäß Anspruch 3. Bei den, wie eingangs bereits erläutert, schnell arbeitenden Kraftstoffeinspritzvorrichtungen, die daraufhin konzipiert sind, daß sie bis zum Einspritzende mit einem hohen Kraftstoffeinspritzdruck Kraftstoff einspritzen und danach ein sehr schnelles Schließen des Ventilschließglieds des Kraftstoffeinspritzventiles bewirken, kann es vorkommen, daß das Druckventilschließglied diesem schnellen Druckabbau im Pumpenarbeitskaum nicht folgen kann und verzögert an seinem Ventilsitz gelangt. In diesem Bereich ist es aber möglich, daß es zu einem teilweisen oder vollständigen Entleeren des Volumens zwischen Druckventilschließglied und Einspritzventilschließglied des Kraftstoffeinspritzventiles kommt. Der Grad der Leerung hängt von den dynamischen Umständen ab, was bewirkt, daß es zu erheblichen Streuungen des Druckzustandes innerhalb der Einspritzleitung nach dem Druckventilschließglied kommt. Bei dem nachfolgenden Kraftstoffeinspritzvorgang müssen diese Volumina wieder durch den vom Pumpenkolben geförderten, zugemessenen Kraftstoff aufgefüllt werden, was zu Streuungen der Kraftstoffeinspritzmengen und Anregungen von Druckschwingungen beim Wiederauffüllen durch eine Hochdruckwelle in der Kraftstoffeinspritzleitung führen kann. Dadurch, daß gemäß Kennzeichen von Anspruch 3 ein Druckausgleich konstanten Niveaus in der Einspritzleitung nach dem Druckventilschließglied herbeigeführt wird, werden diese Nachteile vermieden.

Eine besonders vorteilhafte Ausführung gemäß Anspruch 4 hat den Vorteil, daß die Verbindung zwischen Pumpenarbeitsraum und Kraftstoffeinspritzleitung unmittelbar nach Hubbeginn des Pumpenkolbens unterbrochen ist, so daß dynamische Einflüsse nicht zur Wirkung kommen.

Die Ausgestaltung gemäß Anspruch 5 ist dagegen wesentlich vereinfacht. Abweichend von obenstehender Ausführungsform wird der Druck in der Kraftstoffeinspritzleitung zwischen Kraftstoffeinspritzventilschließglied und Druckventilschließglied während des Überschiebevorgangs von Kraftstoff aus dem Pumpenarbeitsraum beim beginnenden Förderhub des Pumpenkolbens gegenüber dem Versorgungsdruck erhöht. Im Zeitpunkt des Schließens des Magnetventils ist damit die bereits vorherrschende in Öffnungsrichtung wirkende Kraft auf das Druckventilschließglied größer als beim vorgenannten Ausführungsbeispiel, so daß es nur noch eines geringeren Druckanstiegs im Pumpenarbeitsraum bedarf, das Druckventilschließglied bei gleichen Abmessungen und gleicher Federkraft zu öffnen. Diese Lösung hat den Vorteil, daß beim Öffnen des Druckventilschließgliedes keine Druckdifferenz in der anschließenden Kraftstoffeinspritzleitung gegenüber dem Druck im Pumpenarbeitsraum besteht, und somit keine Druckschwingungen angeregt werden.

Eine andere Weiterbildung der Erfindung gemäß Anspruch 6 hat den Vorteil, daß mit den Teilhüben des Druckventilschließgliedes eine zweistufige Öffnung des Druckventils erreicht wird und bei dem Öffnungshub gegen die Kraft der ersten Feder ein definierter Druck in die Kraftstoffeinspritzleitung stromabwärts des Druckventilschließglieds gebracht wird. Der zweite Teilhub gegen die zweite Feder beeinflußt dann bei Schließen des Magnetventils den Druckanstieg insbesondere während des Schließvorgangs des Magnetventils. Vorteilhafterweise kann dabei gemäß Anspruch 7 als zweite Feder die Ventilschließfeder dienen, so daß keine zusätzliche Feder wie bei den bekannten Ausführungsformen vorgesehen werden muß.

Figurenbeschreibung

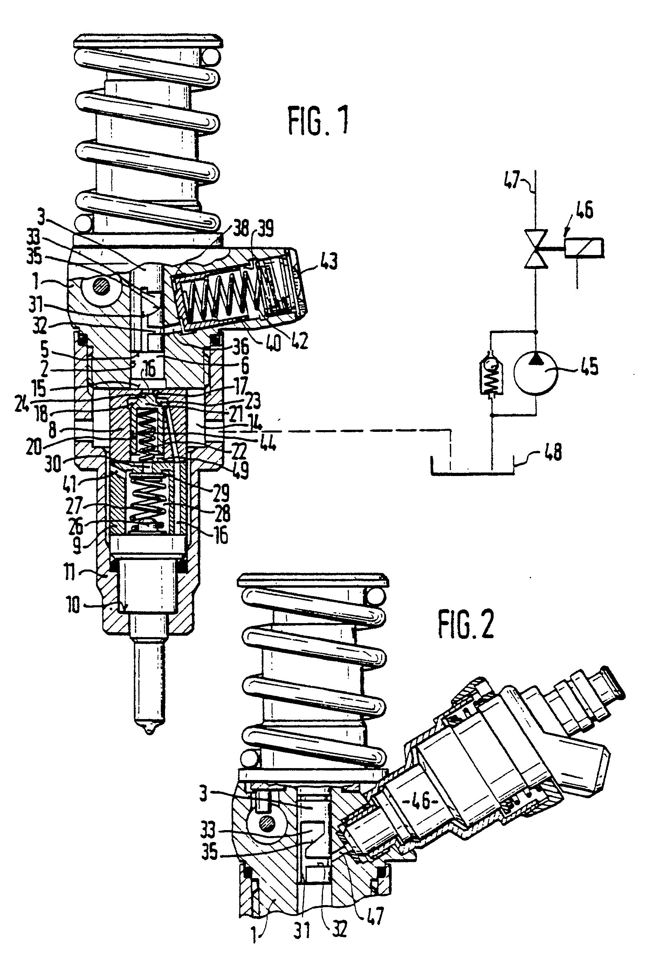

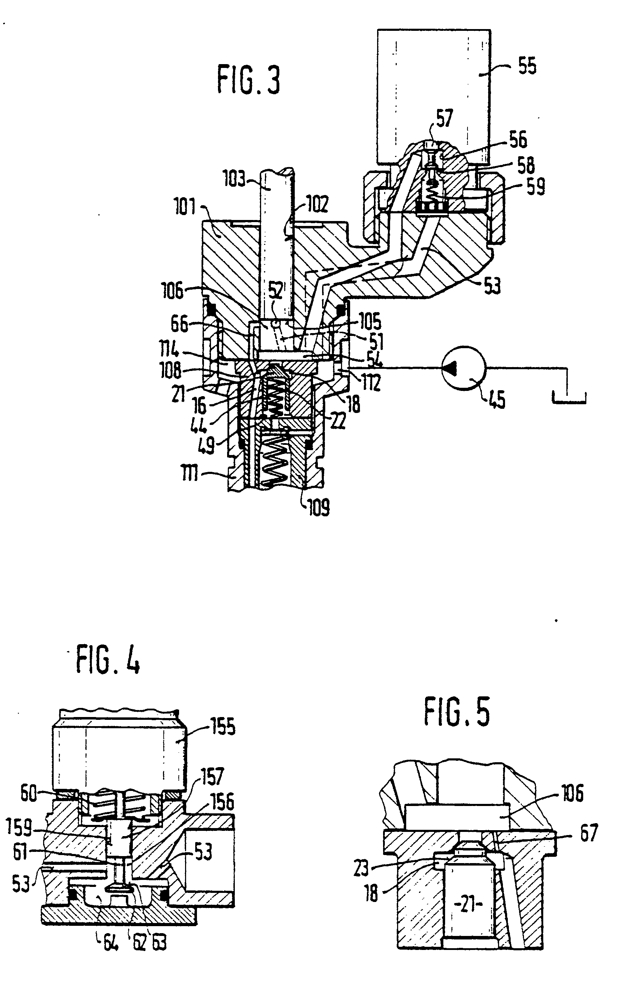

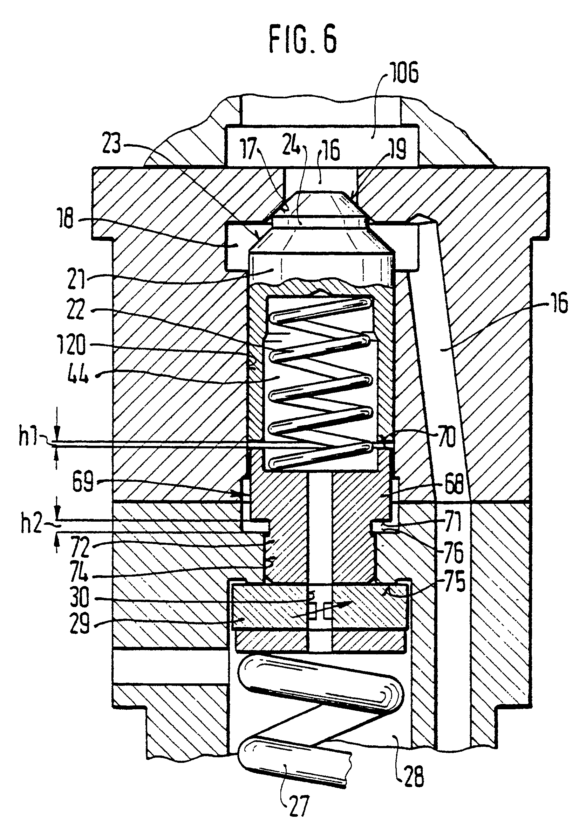

Die in der Beschreibung näher erläuterten Ausführungsbeispiele des Gegenstands der Erfindung sind in der Zeichnung dargestellt. Es zeigen Figur 1 ein erstes Ausführungsbeispiel mit einer Kraftstoffeinspritzvorrichtung in Form einer Pumpedüse im Teilschnitt, Figur 2 einen in der Drehlage versetzten Teilschnitt durch das Ausführungsbeispiel nach Figur 1, Figur 3 ein zweites Ausführungsbeispiel als Teilschnitt durch eine Pumpedüse mit einem abgewandelten der Kraftstoffmengensteuerung dienenden Magnetventil, Figur 4 eine abgewandelte Form des Magnetventils nach Figur 3 zum dritten Ausführungsbeispiel, Figur 5 ein viertes Ausführungsbeispiel mit einer parallel zum Druckventil liegenden Drosselverbindung zwischen Pumpenarbeitsraum und Einspritzleitung und Figur 6 ein fünftes Ausführungsbeispiel mit einem Druckventil mit zweistufiger Öffnungscharakteristik zur Erzielung eines Druckausgleichs in der Einspritzleitung in der ersten Öffnungsphase.

Beschreibung der Ausführungsbeispiele

Figur 1 zeigt als erstes Ausführungsbeispiel als Kraftstoffeinspritzvorrichtung eine Pumpedüse im Teilschnitt, wobei die nicht erfindungswesentlichen Teile weggelassen wurden. Dabei ist in einem Pumpengehäuse 1 ein Pumpenzylinder 2 vorgesehen, in dem ein Pumpenkolben 3 in hier nicht näher dargestellter Weise von einem Antriebsnokken in eine hin- und hergehende, pumpende Bewegung versetzt wird. Der Pumpenkolben schließt mit seiner Stirnseite 5 in dem stirnseitig geschlossenen Pumpenzylinder 2 einen Pumpenarbeitsraum 6 ein. Der stirnseitige Verschluß des Pumpenzylinders 2 erfolgt über ein Zwischenstück 8, dem sich koaxial ein Kraftstoffeinspritzventil 9 anschließt, das durch eine an einer Schulter 10 des Kraftstoffeinspritzventils angreifende Haltemutter 11 unter Bildung der Gehäuseeinheit der Pumpedüse dicht gegen das Zwischenstück 8 gepreßt wird. Die Haltemutter ist dabei mit dem Pumpengehäuse 1 verschraubt und bildet in ihrem Innern zusammen mit der Mantelfläche des Zwischenstückes 8 einen Niederdruckraum 14, der mit der Niederdruckseite der Kraftstoffversorgung verbunden ist.

Von der Stirnseite 15 des Pumpenzylinders 2 führt eine Einspritzleitung 16 ab, deren Durchtrittsquerschnitt unmittelbar angrenzend an den Pumpenarbeitsraum von einem kegelförmig ausgebildeten Ventilsitz 17 begrenzt wird, wobei die Einspritzleitung anschließend an diesen Ventilsitz in einen ringförmigen Raum 18 mündet, von dem aus sie in ihrem weiteren Verlauf im Zwischenstück 8 in bekannter Weise zum Einspritzventil 9 führt.

Der Austritt der Einspritzleitung aus dem Pumpenarbeitsraum sowie der kegelförmige Ventilsitz liegen koaxial zur Achse des Pumpenkolbens. Koaxial schließt sich weiterhin an den Raum 18 ein Führungszylinder 20 an mit einem Durchmesser, der größer ist als der äußerste Durchmesser des kegelförmigen Ventilsitzes 17. In dem Führungszylinder ist ein Druckventilschließglied 21 dicht verschiebbar, das auf seiner Rückseite von einer Ventilfeder 22 belastet wird, die sich an der Stirnseite der Führungszylinders abstützt. Das zylinderförmige Druckventilschließglied 21 ragt in den Raum 18 und verjüngt sich dort unter Bildung einer Druckschulter 23 zu einem Zapfen 24, der eine kegelförmige mit dem Ventilsitz 17 korrespondierende Dichtfläche trägt. Durch die Ventilfeder wird das Druckventilschließglied auf dem kegelförmigen Sitz 17 gehalten und verschließt dabei die Verbindung der Einspritzleitung zwischen Pumpenarbeitsraum 6 und Einspritzventil 9.

Das Einspritzventil weist zum Beispiel in bekannter Weise eine hier nicht weiter gezeigte, nach innen öffnende Ventilnadel auf, die eine nicht weiter gezeigte Druckschulter hat, auf die über die Einspritzleitung 16 der auf Hochdruck gebrachte Kraftstoff geleitet wird, durch den die Ventilnadel in Öffnungsrichtung betätigbar ist. In Schließrichtung wirkt auf die Ventilnadel über einen am Ende der Ventilnadel befindlichen Federteller 26 die Kraft einer vorgespannten Ventilschließfeder 27, die in einem Ventilfederraum 28 des Einspritzventils angeordnet ist und sich an ihrem entgegengesetzten Ende über einen Federteller 29 am stirnseitigen Ende des Federraumes 28 abstützt. Der zylindrisch ausgebildete Federraum liegt ebenfalls wie auch die Achse der Ventilnadel des Einspritzventils koaxial zur Achse der Pumpenkolbens 3 und ist über einen koaxialen Kanal 30, der auch durch den Federteller 29 hindurch geht, mit einem von der Rückseite des Druckventilschließgliedes im Führungszylinder eingeschlossenen Federraum 44 und zugleich über eine Öffnung 41 mit dem Niederdruckraum verbunden.

Der Pumpenkolben 3 hat in seiner Mantelfläche eine Längsnut 31, die den Pumpenarbeitsraum mit einer Ringnut oder Teilringnut 32 verbindet. Weiterhin verbindet die Längsnut 31 den Pumpenarbeitsraum mit einer Ausnehmung 33 in der Mantelfläche des Pumpenkolbens, die auf der dem Pumpenarbeitsraum abgewandten Seite eine rechtwinklig zur Pumpenkolbenachse ausgebildete Begrenzungskante aufweist und zum Pumpenarbeitsraum hin eine schräg verlaufende, als Steuerkante ausgebildete Begrenzungskante 35 aufweist. In der gezeigten Endstellung des Pumpenkolbens am Ende des Saughubes (UT) steht die Teilringnut 32 mit der Öffnung eines Entlastungskanals 36 in Verbindung, der vom Pumpenzylinder 2 in einen Speicherraum 38 führt. Dieser wird von einem Zylinder 39 gebildet, in dem ein eine bewegliche Wand 40 bildender Kolben dicht verschiebbar angeordnet ist, auf dessen Rückseite sich eine Druckfeder 42 abstützt, die andererseits an einem den Zylinder 39 verschließenden Verschlußstopfen 43 anliegt.

In der Figur 2, die einen in der Drehlage versetzten Schnitt durch das Ausführungsbeispiel nach Figur 1 zeigt, ist ein Magnetventil 46 dargestellt, das mit seinem hier nicht weiter dargestellten Schließglied die Verbindung einer Kraftstoffversorgungsleitung 47 zu einer Kraftstoffversorgungsquelle steuert. Diese ist eine Niederdruckquelle, die aus einer in Figur 1 gezeigten Förderpumpe 45 besteht, die aus einem Kraftstoffvorratsbehälter 48 Kraftstoff ansaugt und deren Förderdruck durch ein Drucksteuerventil bestimmbar ist. Die Kraftstoffversorgungsleitung 47 mündet in den Zylinder 2 in dem Bereich der Teilringnut 32, wenn sich der Pumpenkolben 3 am Ende seines Saughubes in der gezeigten unteren Totpunktlage (UT) befindet.

Im Betrieb wird bei der in Figur 1 gezeigten Pumpedüse der Pumpenkolben 3 in eine hin- und hergehende Pumpbewegung versetzt. In der gezeigten Ausgangslage im unteren Totpunkt hat der Kolben 40, der den Speicherraum 38 begrenzt, den Inhalt desselben in den Pumpenarbeitsraum 6 eingebracht. Zusätzlich ist über das Magnetventil eine bestimmte Kraftstoffmenge in den Pumpenarbeitsraum 6 zugemessen worden. Beim sich anschließenden Förderhub des Pumpenkolbens wird der Entlastungskanal 36 durch die Mantelfläche des Pumpenkolbens verschlossen und bleibt es solange, bis er wieder durch die schräge Steuerkante 35 geöffnet wird. In dem dazwischen liegenden Hub fördert der Pumpenkolben den verdrängten Kraftstoff unter Hochdruck in die Einspritzleitung 16, wobei das Druckventilschließglied 21 von seinem Sitz abgehoben wird. Der an der Ventilnadel angreifende Einspritzdruck öffnet das Kraftstoffeinspritzventil und es erfolgt der Austritt von Kraftstoff in den angrenzenden Brennraum der Brennkraftmaschine. In dem Moment, wo der Entlastungskanal 36 durch die Steuerkante 35 geöffnet wird, strömt der nunmehr weiterverdrängte Kraftstoff in den Speicherraum 38 wohin er sich auch expandieren kann. In dem Moment ist die Kraftstofförderung aus dem Pumpenarbeitsraum 6 in die Einspritzleitung 16 bzw. zur Öffnung des Einspritzventils unterbrochen. Die mit dem Verschließen der Einspritzleitung in dem Bereich zwischen Ventilsitz 17 und Einspritzventilöffnung danach hin- und herlaufenden Druckwellen können ihre Spitzen dadurch abbauen, daß das Druckventilschließglied auf seiner Druckschulter 23 belastet wieder öffnet und die Einspritzleitung 16 zum Pumpenarbeitsraum 6 hin entlastet, der nunmehr auf geringerem Druckniveau steht. Dieses Druckniveau wird durch die den Kolben 40 beaufschlagende Federkraft bestimmt und ist merklich niedriger als der Einspritzdruck, aber höher als der Druck der Kraftstoffversorgungsquelle. Somit herrscht bei Beginn eines jeden der aufeinanderfolgenden Förderhübe im Bereich zwischen Druckventilschließglied und Einspritzventilöffnung bzw. Einspritzventilschließglied ein gleicher Ausgangsdruck, was ein Schwanken der Kraftstoffeinspritzmengen verhindert, das heißt die Einspritzgenauigkeit erhöht.

Bis zum Ende der Förderhubbewegung des Pumpenkolbens wird der nach Überfahren der Entlastungskanalöffnung weiterhin verdrängte Kraftstoff in den Speicherraum 38 gefördert. Beim anschließenden Saughub wird zunächst ein Teil dieses verdrängten restlichen Kraftstoffes so lange, sich die Mündung des Entlastungskanals im Bereich der Ausnehmung 33 befindet, wieder zurück in den Pumpenarbeitsraum gefördert, wogegen der Rest des gespeicherten Kraftstoffes bei UT über die Teilringnut 32 in den Pumpenarbeitsraum gefördert wird. Im Zeitpunkt, wo diese letztgenannte Verbindung hergestellt wird, ist das Druckniveau im Pumpenarbeitsraum erheblich abgesenkt, was das Überschieben des Kraftstoffs aus dem Speicherraum 38 begünstigt. Die Menge des auf diese Art und Weise in den Pumpenarbeitsraum eingebrachten Kraftstoffs wird bestimmt durch die Drehlage des Pumpenkolbens bzw. durch den Hub, ab dem der Entlastungskanal durch die schräg verlaufende Steuerkante aufgesteuert wird. Anschließend wird über das Magnetventil die für den nächsten Kraftstoffeinspritzvorgang vorgesehene Kraftstoffmenge zugemessen. Zusammen mit der zuvor bereits im Pumpenarbeitsraum befindlichen Kraftstoffmenge ergibt sich dann der Punkt des Spritzbeginns, bei dem der Druck im Pumpenarbeitsraum so weit erhöht ist, daß der Öffnungsdruck des Einspritzventils erreicht ist. Bei dieser Art von Pumpedüse bestimmt also im wesentlichen die Drehlage des Pumpenkolbens den Spritzbeginn.

Beim Spritzbeginn muß zur Aufnahme der Kraftstoffeinspritzung zunächst das Druckventilschließglied 21 aus seiner Schließlage gebracht werden. Dabei wirkt zunächst eine kleine Druckfläche auf das Ventilschließglied in der Größenordnung des pumpenarbeitsraumseitigen Durchtrittsquerschnitts der Einspritzleitung und zusätzlich der Restdruck in der Kraftstoffeinspritzleitung 16 auf die Druckschulter 23. Auf der Rückseite des Druckventilschließglieds wirkt in Unterstützung der Ventilfeder 22 der Niederdruck. Nach Abheben des Ventilschließgliedes vom Ventilsitz 17 wirkt dagegen der Kraftstoffdruck auf den gesamten Querschnitt, was zu einem merklich schnelleren Ausweichen des Druckventilschließgliedes 21 führt. Dieses stellt somit ein Schluckvolumen dar, das zunächst den weiteren Kraftstoffdruckanstieg verlangsamt, was bei dem beschriebenen Beispiel zugleich mit einer anfänglich kleineren Einspritzrate verbunden ist. Dies ist unter anderem vorteilhaft im Sinne einer zunächst verzögerten Einbringung von Kraftstoff in den Brennraum, da zu Spritzbeginn mit einer Zündverzugszeit zu rechnen ist. Es wird somit vermieden, daß nach Ende dieser Verzugszeit eine zu große Kraftstoffmenge schlagartig zur Entflammung kommt und dabei ein unerwünschtes Verbrennungsgeräusch erzeugt (Klopfen, Nageln). Der Ausweichhub des Druckventilschließglieds 21 ist durch seinen Anschlag 49 am Ende des Führungszylinders 20 bestimmt, der Hub des Druckventilschließglieds ist den zu erreichenden Wirkungen angepaßt. Das beim Öffnungsvorgang vom Druckventilschließglied verdrängte Kraftstoffvolumen wird über den Kanal 30 zur Niederdruckseite 14 zurückgeführt. Der Kanal 30 selbst oder ein Teil desselben kann auch als Drossel ausgebildet sein. Diese zusammen mit der Charakteristik der Ventilfeder 22 und dem Durchmesser des Druckventilschließglieds bestimmt zusätzlich zur Fördercharakteristik des Pumpenkolbens die Ausweichgeschwindigkeit des Druckventilschließgliedes, da dieses bei seinem Ausweichvorgang Kraftstoff auf seiner Rückseite komprimiert. Man hat hiermit auch durch Verstellen der Drossel in Abhängigkeit von Betriebsparametern eine Eingriffsmöglichkeit in den Einspritzverlauf bei Spritzbeginn. Auch ein Verändern des Niederdruckniveaus ist eine zusätzliche Eingriffsmöglichkeit. Die Beeinflussung des Kraftstoffdruckanstieges ist aber auch von wesentlichem Vorteil bei den nachfolgend beschriebenen Anwendungen nach Figuren 3 und 4.

Beim Ausführungsbeispiel nach Figur 3 ist ebenfalls wie in Figur 1 eine Pumpedüse gezeigt mit einem Pumpengehäuse 101, in dem ein Pumpenzylinder 102 vorgesehen ist. In diesem ist ein Pumpenkolben 103 angeordnet, der in hier nicht näher dargestellter Weise von einem Antriebsnokken in eine hin- und hergehende, pumpende Bewegung versetzt wird. Der Pumpenkolben schließt mit seiner Stirnseite 105 im Pumpenzylinder 102 einen Pumpenarbeitsraum 106 ein, der auf der anderen Seite durch das von Figur 1 bekannte Zwischenstück 108 verschlossen wird. Dieses wird durch die Haltemutter 111 und das Kraftstoffeinspritzventil 109 dicht an das Gehäuse 101 gepreßt. Zwischen Haltemutter 111 und dem Zwischenstück 108 wird ein Niederdruckraum 114 gebildet, der über eine Öffnung 112 in der Haltemutterwand mit der die Kraftstofförderpumpe 45 enthaltenden Niederdruckquelle in Verbindung steht.

Dieser Niederdruckraum 114 hat eine Verbindung über einen Kanal 51 mit einer Eintrittsöffnung 52 in den Pumpenzylinder 102. Die Eintrittsöffnung 52 wird vom Pumpenkolben 103 dann aufgesteuert, wenn er sich in der gezeigten Endlage am Ende des Pumpensaughubes befindet. Der Pumpenarbeitsraum 106 wird dann über die Niederdruckquelle 45 mit Kraftstoff gefüllt.

Der Pumpenarbeitsraum ist ferner ständig und durch den Kolben 103 nicht verschließbar mit einem Entlastungskanal 53 verbunden. Der Entlastungskanal ist dabei über eine Ausnehmung 54 am dem dem Zwischenstück 108 benachbarten Ende des Pumpenzylinders mit dem Pumpenarbeitsraum verbunden. Der Entlastungskanal führt zu einem Magnetventil 55, das den Durchtritt des Entlastungskanals steuert. Dieser mündet dabei in einen Ringraum 56, der koaxial von einem Ventilschließglied 57 des Magnetventils durchdrungen wird. Koaxial zum Schließglied führt der Entlastungskanal aus dem Raum 56 weiter zur Niederdruckquelle, wobei der Entlastungskanal 53 über den Niederdruckraum 114 geführt werden kann. Es ist aber auch eine unmittelbare Verbindung zur Förderpumpe 45 möglich.

Der Austritt des Entlastungskanals aus dem Raum 56 ist als Ventilsitz 58 ausgestaltet, auf dem in Schließstellung das Ventilschließglied 57 mit einer entsprechenden Dichtfläche auf seiner Stirnseite zur Anlage kommt. In dieser Position ist das Ventilschließglied, das im wesentlichen als Nadelventilschließglied zu bezeichnen ist, druckausgeglichen, das heißt, daß der vom Pumpenarbeitsraum 106 in den Raum 56 gelangende unter Hochdruck stehende Kraftstoff keine wesentliche Öffnungskomponente auf das Ventilschließglied ausübt. Das Ventilschließglied wird üblicherweise bei Erregung des hier nicht gezeigten Elektromagneten betätigt und kann von einer Rückstellfeder 59 belastet werden.

Statt der in Figur 3 gezeigten Ausgestaltung des Magnetventils kann dieses auch wie das in einem Teilschnitt durch eine Pumpedüse in Figur 4 gezeigte Magnetventil 155 ausgeführt, sein. Hier besteht das Ventilschließglied 157 aus einem schieberähnlichen Element, das in einer Bohrung 159 dichtverschiebbar ist, auf dem dem hier nicht weiter gezeigten Anker des Elektromagneten zugewandten Ende von einer Druckfeder 60 beaufschlagt ist und am anderen Ende über einen Stößel 61 mit einem Ventilteller 62 verbunden ist. Der Ventilteller 62 weist eine kegelig verlaufende, ringförmige und zum Ventilschließglied 157 weisende Dichtfläche 63 auf, die mit einem Ventilsitz zusammenarbeitet, der sich am Austritt der Bohrung 159 in einen Entlastungsraum 64 befindet. In Schließstellung wird zwischen dem kolbenförmigen Teil des Ventilschließglieds, dem Stößel 61 und dem Ventilteller 62 der Ringraum 156 gebildet, in den der Entlastungskanal 53 einmündet. Der Entlastungskanal führt dann aus dem Entlastungsraum 64 weiter zur Niederdruckquelle. Auch dieses Ventilschließglied ist in Schließstellung bezogen auf den Hochdruck im Pumpenarbeitsraum bzw. Ringraum 156 druckausgeglichen.

Wie beim Ausführungsbeispiel nach Figur 1 ist ferner in dem Zwischenstück 108 das Druckventil mit dem Druckventilschließglied 21 vorgesehen, das den Durchtritt der Einspritzleitung 16 vom Pumpenarbeitsraum her zum Einspritzventil 109 kontrolliert. Der von der Rückseite des Druckventilschließglieds eingeschlossene Federraum 44 ist dabei in gleicher Weise mit dem Niederdruckraum 114 verbunden wie beim Ausführungsbeispiel nach Figur 1.

Im Betrieb der Pumpedüse ist der Pumpenarbeitsraum 106 in der gezeigten Ausgangsstellung mit Kraftstoff gefüllt, wobei, wie beschrieben, die Füllung über die Eintrittsöffnung 52 erfolgt. In diesem Zustand ist auch das Magnetventil geöffnet, so daß auch eine durchgehende Verbindung vom Pumpenarbeitsraum über den Entlastungskanal zur Niederdruckquelle vorliegt. Auch über diesen Weg wäre bei entsprechender Ausgestaltung des Durchtrittsquerschnitts am Magnetventil ein Füllen des Pumpenarbeitsraumes 106 möglich. Beim anschließenden Förderhub des Pumpenkolbens wird die Öffnung 52 verschlossen, während zunächst das Magnetventil 55 noch geöffnet ist. Während dieses Hubes bis zu dem Zeitpunkt, wo das Magnetventil zur Auslösung des Spritzbeginns geschlossen wird, verdrängt der Pumpenkolben Kraftstoff, was aufgrund der Drosselung am Ventilsitz 58 zu einer Erhöhung des Kraftstoffdruckes im Pumpenarbeitsraum über den Wert des Druckes im Niederdruckraum 14 hinaus führt. Dieser Druck wirkt sich beim Schließvorgang des Magnetventils auf die Dichtfläche am Ventilschließglied aus, da diese Fläche außerhalb des Flächengleichgewichtes am Ventilschließglied liegt. Der entstehende Druck wirkt deshalb der Schließbewegung des Magnetventils entgegen. Entsprechend ist die Schließkraft des Magneten des Magnetventils auszulegen. Während des Schließvorgangs des Magnetventils kann der dabei im Ringraum 156 bzw. im Raum 56 anstehende Druck wegen der zunehmenden Drosselung am Durchtrittsquerschnitt des Entlastungskanals noch weiter zunehmen. Dieser Zunahme wirkt dann aber das Druckventilschließglied 21 entgegen. Nach Erreichen eines entsprechenden, angepaßten Öffnungsdruckes im Pumpenarbeitsraum hebt das Druckventilschließglied 21 von seinem Sitz ab und führt eine Ausweichbewegung aus, indem es das weiterhin vom Pumpenkolben verdrängte Kraftstoffvolumen oder ein Teil dieses Volumens schluckt. Der dabei in der Einspritzleitung 16 auftretende Druck nach Öffnen des Druckventilschließglieds überschreitet noch nicht den Öffnungsdruck des Kraftstoffeinspritzventils. In der Folge wird also der weitere Druckanstieg vermittels der Ausweichbewegung des Druckventilschließgliedes 21 wesentlich vermindert, so daß das Ventilschließglied 57 bzw. 157 ohne wesentliche Behinderung schließen kann. Auf diese Weise kann die Steuerung des Entlastungskanalsdurchtritts mit einem weniger aufwendigen Magnetventil und weniger Energie durchgeführt werden. Die Dimensionierung des Druckventilschließgliedes bezüglich seinem Durchmesser, der Rückstellkraft seiner Ventilfeder 22 und die Dimensionierung der Verbindung des Federraumes 44 zum Niederdruckraum 14, wie bereits zu Figur 1 näher erläutert, muß in diesem Fall auf die Hubrate und das Verdrängungsvolumen des Pumpenkolbens 103 einerseits und die Querschnitts- und Flächenverhältnisse am Ventilschließglied 57 bzw. 157 am Magnetventil abgestimmt sein. Zugleich ist die Ausweichbewegung des Druckventilschließgliedes 21 durch einen Anschlag 49 einzustellen. Dieser bestimmt das gesamte Schluckvolumen, das beim Spritzbeginn zur Wirkung kommt.

Nach vollständigem Schließen des Durchtrittsquerschnitts des Entlastungskanals 53 steigt der Druck im Pumpenarbeitsraum 106 auf Einspritzdruck an, was zum Öffnen des Einspritzventiles führt. Der weiterhin vom Pumpenkolben verdrängte Kraftstoff gelangt dann so lange zur Einspritzung, bis der Entlastungskanal 53 durch das Magnetventil wieder geöffnet wird. Dies führt zur schnellen Absenkung des Druckes im Pumpenarbeitsraum 106 und zum Schließen des Druckventils. Bei auftretenden Druckwellen in der Einspritzleitung wird wie im Vorstehenden bereits einmal ausgeführt das Druckventilschließglied 21 über seine Druckschulter kurzzeitig zur Entlastungs geöffnet.

Mit vorstehender Ausführungsform erhält man eine exakte Steuerung von Einspritzbeginn- und -ende und damit zugleich auch der Kraftstoffeinspritzmenge pro Pumpenkolbenhub. Mit Hilfe des Druckventilschließgliedes läßt sich zudem ein schnelles und exaktes Schließen bei geringem konstruktiven und energetischem Aufwand durch das Magnetventil erzielen.

Bei schnellen Einspritzfolgen bzw. bei hoher Drehzahl der Brennraftmaschine kann es jedoch auftreten, daß das Druckventilschließglied im Moment des Öffnens der Entlastungsleitung 53 durch das Magnetventil der schnellen Druckabsenkung im Pumpenarbeitsraum 106 nicht schnell genug folgen kann. Die Folge ist, daß auch die Einspritzleitung 16 stark entleert werden kann, so daß hier im Moment des Schließens der Verbindung zum Pumpenarbeitsraum ein mehr oder weniger niedriger Druck vorliegen kann. Insbesondere sind dabei je nach Lage der dynamischen Verhältnisse mehr oder weniger starke Streuungen dieses Druckzustandes möglich. Beim anschließenden Förderhub muß dann mehr oder weniger Kraftstoff in die Einspritzleitung gefördert werden, bis in dieser der Öffnungsdruck des Kraftstoffeinspritzventils erreicht wird. Dies führt einerseits zu Streuungen der durch geometrische Festlegung gesteuerten Kraftstoffeinspritzmenge und andererseits kann es zu erheblichen Druckschwingungen im Hochdrucksystem führen, was das Einspritzergebnis erheblich verschlechtert. Um diese unterschiedlichen Druckzustände nach dem Schließen des Druckventilschließglieds in der Einspritzleitung zu verhindern, ist diese über eine Ausgleichsleitung 66 mit dem Pumpenarbeitsraum verbunden. Die Ausgleichsleitung führt vom Raum 18 in den Pumpenzylinder 102 und mündet dort in Höhe der Eintrittsöffnung 52 ein. Sobald der Pumpenkolben 103 in die gezeigte Ausgangsstellung im unteren Totpunkt gelangt, wird somit durch den Pumpenkolben eine Verbindung zwischen Pumpenarbeitsraum 106 und Einspritzleitung 16 hergestellt. Über die Ausgleichsleitung kann dann das Druckniveau in der Einspritzleitung 16 auf das Versorgungsdruckniveau gebracht werden. Beim anschließenden Förderhub wird die Ausgleichsleitung 66 verschlossen. In der Einspritzleitung 16 steht dann somit immer ein konstanter Druck an, womit die obenerwähnten Schwankungen der Kraftstoffeinspritzmenge verhindert werden.

Eine andere Lösung ist in Figur 5 gezeigt, dabei wird der Raum 18 unverschließbar über eine Drosselbohrung 67 mit dem Pumpenarbeitsraum 106 verbunden. Bei dieser Lösung wird die Einspritzleitung 16 zwischen Druckventilschließglied 21 und Ventilschließglied des Einspritzventils in der Zeit, in der der Pumpenkolben 103 sich im unteren Totpunkt befindet, auf den Druck der Niederdruckquelle bzw. der Kraftstoffversorgungsquelle gebracht. Die Drossel ist dabei so ausgelegt, daß der Druck der Kraftstoffversorgungsquelle bei Nenndrehzahl ausreicht, den Druckausgleich in der Einspritzleitung herzustellen. Zu Beginn der Förderung des Pumpenkolbens bei noch offenem Magnetventil erhöht sich der Druck entsprechend dem Druck im Pumpenarbeitsraum. Der Öffnungsdruck des Druckventilschließglieds ist dann so auszulegen, daß die Öffnungsbewegung des Ventilschließglieds beim Schließen des Ventilschließgliedes 57 des Magnetventils einsetzt. Dabei wirkt der Öffnungsdruck dann auf den gesamten Querschnitt des Druckventilschließgliedes, also sowohl auf die Druckschulter 23 als auch auf die von der Dichtfläche begrenzte Fläche am Druckventilschließglied. Diese Lösung hat den Vorteil, daß beim Öffnen des Druckventilschließglieds keine Druckdifferenz zwischen Pumpenarbeitsraum und Einspritzleitung 14 besteht und somit auch keine Druckschwingung angeregt werden kann.

Eine dritte Lösung für den Druckausgleich in der Einspritzleitung auch bei hohen Betriebsdrehzahlen der Kraftstoffeinspritzvorrichtung zeigt Figur 6. Auch hier ist in der vom Pumpenarbeitsraum 106 abzweigenden Einspritzleitung der Ventilsitz 17 vorgesehen, auf dem das Druckventilschließglied 21 mit seiner Dichtfläche 19 zur Anlage kommt. Die Dichtfläche 19 ist wie der Sitz kegelförmig ausgebildet und befindet sich an einem angeformten Zapfen 24, der in die Druckschulter 23 des in den Raum 18 ragenden Teils des Druckventilschließgliedes angrenzt. Vom Raum 18 führt die Einspritzleitung 16 weiter zum Kraftstoffeinspritzventil. Der Führungszylinder 120 des Druckventilschließglieds wird im vorliegenden Fall durch den im Durchmesser größeren Teil 68 eines Stufenkolbens 69 auf der Rückseite des Druckventilschließglieds stirnseitig verschlossen, wobei der Stufenkolben zusammen mit dem Druckventilschließglied den Federraum 44 einschließt, in dem auch die Ventilfeder 22 zwischen diesen beiden Teilen eingespannt angeordnet ist.

Die Stirnseite des größeren Teils 68 des Stufenkolbens dient dabei als Anschlag 70 für die Rückseite des Druckventilschließgliedes. Der Stufenkolben weist ferner eine als zweiten Anschlag 71 dienende Schulter auf, die am Übergang zwischen dem größeren Durchmesserteil 68 zu dem in Durchmesser kleineren Teil 72 des Stufenkolbens gebildet wird. Dieser kleinere Teil taucht in eine zur Führungsbohrung 120 koaxiale Bohrung 74 ein, die in den von Figur 1 bekannten Ventilfederraum 28 koaxial zu diesem einmündet. An der dortigen Stirnseite 75 kommt der Federteller 29 zur Anlage derart, daß er als Auflager für den im Durchmesser kleineren Teil 72 des Stufenkolbens dient. Koaxial durch Stufenkolben 69 und Federteller 29 führt der Kanal 30, der den Federraum 44 mit dem Ventilfederraum 28 verbindet.

Mit dem Stufenkolben werden zwei Teilhübe $h_1$ und $h_2$ des Druckventilschließglieds verwirklichbar. Der erste Teilhub $h_1$ ist der, den das Druckventilschließglied 21 gegen die Kraft der Ventilfeder 22 bis zur Anlage an den Stufenkolben 69 zurücklegt. In dieser Stellung liegt einerseits der Stufenkolben 69 am Ventilteller 29 an und andererseits der Ventilteller 29 an der Stirnseite 75 des Raumes 28 an. In der Folge bei steigender Druckbeaufschlagung des Druckventilschließglieds werden beide Teile, das Druckventilschließglied und der Stufenkolben gegen die Kraft der Ventilschließfeder 27 verschoben, wobei der Ventilteller 29 von der Stirnseite 75 abhebt bis der Stufenkolben mit seinem zweiten Anschlag 71 zur Anlage an einer entsprechenden Schulter 76 am Übergang zwischen Führungsbohrung 120 und Bohrung 74 gelangt. Hierbei legt das Druckventilschließglied 21 einen zweiten Teilhub $h_2$ zurück. Dabei kann zur Anpassung der Bewegungscharakteristik der Kanal 30 mit einem insbesondere auch einstellbaren Drosselquerschnitt versehen werden. Dies ist zum Beispiel dadurch erzielbar, daß der Federteller zweigeteilt ist und jeweils mit einer Durchgangsbohrung versehen ist mit gleicher Exzentrizität mit dem Betrag des Durchmessers des Kanals 30. Durch gegenseitiges Verstellen der Federtellerscheiben läßt sich dann der Durchtrittsquerschnitt variieren.

Durch diese Ausgestaltung wird erreicht, daß bei Beginn der Förderung des Pumpenkolbens und Erreichen eines ersten niedrigen Öffnungsdruckes das Druckventilschließglied 21 geringfügig öffnet und dabei eine Verbindung zwischen Pumpenarbeitsraum und der Einspritzleitung 16 herstellt. In dieser Arbeitsphase kann die Einspritzleitung 16 auf den Druck vorgespannt werden, der vor dem Schließen des Magnetventils im Pumpenarbeitsraum 106 herrscht. Der zweite Teilhub $h_2$ wird beim Schließvorgang des Ventilschließgliedes 57 bzw. 157 des Elektromagneten durchlaufen, wobei der beschriebene Effekt der Verflachung des Druckanstieges auftritt. Während des Teilhubs $h_2$ ist das Druckventilschließglied auf seiner gesamten Fläche vom Druck im Pumpenarbeitsraum 106 beaufschlagt, während vor Beginn des ersten Teilhubes $h_1$ nur die Restfläche entsprechend dem Durchtrittsquerschnitt zum Pumpenarbeitsraum vom Druck beaufschlagt wird. Entsprechend diesem Arbeitsmechanismus müssen die Federkennlinien der Ventilfeder 22 und der Ventilschließfeder 27 im Zusammenhang mit der Dimensionierung des Durchmessers des Druckventilschließglieds angepaßt werden.

## Patentansprüche

1. Kraftstoffeinspritzvorrichtung für Brennkraftmaschinen mit einem Pumpenkolben (3), der in einem Pumpenzylinder (2) einen Pumpenarbeitsraum (6) einschließt, der mit einem Kraftstoffeinspritzventil (9) über eine insbesondere in einem den Pumpenzylinder (2) und das Kraftstoffeinspritzventil (9) enthaltenden Gehäuse (Pumpedüse) verlaufende Kraftstoffeinspritzleitung (16) verbindbar ist, wobei ein Durchtrittsquerschnitt der Einspritzleitung (16) von einem Ventilsitz (17) begrenzt ist, mit dem ein dicht in einem Führungszylinder (20) geführtes Druckventilschließglied (21) zusammenarbeitet, dessen die Dichtfläche (19) tragendes Ende aus dem Führungszylinder (20) in einen mit der Einspritzleitung (16) verbundenen Raum (18) taucht, dort eine Druckschulter (23) aufweist und dessen Rückseite von einer Ventilfeder (22) belastet ist und mit einem den Hub des Druckventilschließgliedes begrenzenden Anschlag (49) zusammenarbeitet und der durch die Rückseite des Druckventilschließglieds (21) im Führungszylinder (20) eingeschlossene, die Ventilfeder (22) enthaltende Federraum (44) über einen ständig offenen Kanal (30) mit einem Entlastungsraum (14; 48; 45) verbunden ist, dadurch gekennzeichnet, daß der Pumpenarbeitsraum (6, 16) mit einem Entlastungskanal (53) verbunden ist, in dem ein elektrisch gesteuertes Magnetventil (55, 155) angeordnet ist, dessen Schließglied (57, 157) mit einem einen Durchtrittsquerschnitt des Entlastungskanals (53) begrenzenden Ventilsitz (58) zusammenarbeitet, daß der Entlastungskanal mit einer Kraftstoffversorgungsquelle (45) verbunden ist, die beim Saughub des Pumpenkolbens (106) über den hier als Füllkanal dienenden Entlastungskanal (53) und das elektrisch gesteuerte Ventil (55) und während der von dem elektrisch gesteuerten Ventil (55) gesteuerten Entlastungsphase des Pumpenarbeitsraumes während des Förderhubs des Pumpenkolben (103) mit dem Pumpenarbeitsraumes (106) verbunden ist, wobei das Ventilschließglied (57, 157) ein Hubsteuerorgan ist, dessen an die mit dem Ventilsitz (58) zusammenarbeitende Dichtfläche (63) angrenzende Stirnseite vom Niederdruck der Kraftstoffversorgungsquelle (45) beaufschlagt ist und bezüglich der an die Hochdruckseite angrenzenden Flächen im wesentlichen druckausgeglichen ist und das Verdrängungsvolumen des Druckventilschließgliedes (21) auf die Schließcharakteristik des Ventilschließglieds (57, 157) des Magnetventils derart abgestimmt ist, daß durch die hochdruckseitige Volumenvergrößerung durch das sich verschiebende Druckventilschließglied eine den Schließvorgang des Ventilschließgliedes beschleunigenden und erleichternde Verlangsamung des hochdruckseitigen Kraftstoffdruckanstiegs erzielt wird.

2. Kraftstoffeinspritzvorrichtung nach Anspruch 1, dadurch gekennzeichnet, daß das Ventilschließglied (57, 157) des elektrisch gesteuerten Ventils (55, 155) ein druckausgeglichenes Nadelventilschließglied ist, das eine Ringdichtfläche aufweist, die mit ihrem dem äußersten Durchmesser einer Druckausgleichfläche entsprechenden Durchmesser zur Anlage an den zugehörigen Ventilsitz (58) bringbar ist.

3. Kraftstoffeinspritzvorrichtung nach einem der vorstehenden Ansprüche, dadurch gekennzeichnet, daß in Schließstellung des Druckventilschließglieds (21) eine Verbindung zwischen dem Pumpenarbeitsraum (106) und der zum Kraftstoffeinspritzventil führenden Einspritzleitung (16) wenigstens vor Beginn des wirksamen Förderhubs des Pumpenkolbens (103) hergestellt ist (Figuren 3, 5 und 6).

4. Kraftstoffeinspritzvorrichtung nach Anspruch 3, dadurch gekennzeichnet, daß durch den Pumpenkolben (106) in seiner unteren Totpunktlage (Ende des Saughubes) eine Ausgleichsleitung (66) zwischen dem einspritzventilseitigen Teil der Einspritzleitung (16) und dem Pumpenarbeitsraum (106) aufgesteuert ist (Figur 4).

5. Kraftstoffeinspritzvorrichtung nach Anspruch 3, dadurch gekennzeichnet, daß zwischen dem Pumpenarbeitsraum (106) und der einspritzventilseitigen Einspritzleitung (16) eine Drosselverbindung (67) parallel zum Ventilsitz (17) vorgesehen ist.

6. Kraftstoffeinspritzvorrichtung nach Anspruch 3, dadurch gekennzeichnet, daß das Druckventilschließglied (21) gegen die Kraft einer ersten Feder (22) um einen ersten Teilhub ($h_1$) bis zu einem ersten Anschlag (70) verschiebbar ist, der entgegen einer zweiten Feder (27) um einen zweiten Teilhub ($h_2$) bis zu einem zweiten Anschlag (71, 76) unter Einwirkung des Drucks im Pumpenarbeitsraum (106) verschiebbar ist (Figur 6).

7. Kraftstoffeinspritzvorrichtung nach Anspruch 6.

dadurch gekennzeichnet, daß als zweite Feder die Ventilschließfeder (27) des Kraftstoffeinspritzventils dient und der erste Anschlag (70) durch die erste Feder (22), die sich am Druckventilschließglied (21) abstützt, auf einen Ventilteller (29) der Ventilschließfeder (27) gehalten wird (Figur 6).

8. Kraftstoffeinspritzvorrichtung nach Anspruch 7, dadurch gekennzeichnet, daß der erste Anschlag (70) an einem Stufenkolben (69) ausgebildet ist, der mit seinem einen Teil (68) im Führungszylinder (120) und seinem anderen Teil (72) in einer sich anschließenden koaxialen Bohrung (74) gleitet und die am Übergang von der Bohrung (74) zum Führungszylinder (120) gebildeten Schulter (76) als zweiter Anschlag für eine entsprechende Schulter (71) des Stufenkolbens ausgebildet ist (Figur 6).

9. Kraftstoffeinspritzvorrichtung nach einem der vorstehenden Ansprüche, dadurch gekennzeichnet, daß die Druckschulter (23) des Druckventilschließglieds (21) vom Druck in der Einspritzleitung (16) zwischen Einspritzventil und Ventilsitz (17) des Druckventilschließglieds beaufschlagt ist.

10. Kraftstoffeinspritzvorrichtung nach Anspruch 9, dadurch gekennzeichnet, daß der die Rückseite des Druckventilschließglieds (21) beaufschlagende Druck in Abhängigkeit von Betriebsparametern der Brennkraftmaschine änderbar ist.

11. Kraftstoffeinspritzvorrichtung nach Anspruch 10, dadurch gekennzeichnet, daß das auf der Rückseite des Druckventilschließgliedes (21) im Führungszylinder (20, 121) eingeschlossene Volumen über eine insbesondere steuerbare Drossel (30) mit der Entlastungsseite verbunden ist.

## Claims

1. Fuel injection device for internal combustion engines with a pump plunger (3) which encloses, in a pump cylinder (2), a pump working space (6) which can be connected to a fuel injection valve (9) via a fuel injection line (16), in particular a fuel injection line extending in a casing containing the pump cylinder (2) and the fuel injection valve (9) (unit fuel injector), a cross-section of passage of the injection line (16) being limited by a valve seat (17), with which there interacts a delivery-valve closing member (21) which is guided in leak-proof fashion in a guide cylinder (20), that end of which which bears the sealing face (19) protrudes out of the guide cylinder (20) into a space (18) connected to the injection line (16), there has a pressure shoulder (23), and the rear side of which is loaded by a valve spring (22) and interacts with a stop (49) limiting the stroke of the delivery-valve closing member, and the spring space (44) enclosed in the guide cylinder (20) by the rear side of the delivery-valve closing member (21) and containing the valve spring (22) being connected via a continuously open channel (30) to a relief space (14; 48; 45), characterised in that the pump working space (6, 16) is connected to a relief channel (53) in which is arranged an electrically controlled solenoid valve (55, 155), the closing member (57, 157) of which interacts with a valve seat (58) limiting a cross-section of passage of the relief channel (53), in that the relief channel is connected to a fuel supply source (45) which is connected via the relief channel (53), here serving as filling channel, and the electrically controlled valve (55) to the pump working space (106) during the suction stroke of the pump plunger (106) and during the relief phase of the pump working space, said phase being controlled by the electrically controlled valve (55), during the delivery stroke of the pump plunger (103), the valve closing member (57, 157) being a stroke-control member, that front end of which which adjoins the sealing face (63) interacting with the valve seat (58) is subjected to the low pressure of the fuel supply source (45) and is essentially pressure-balanced in relation to the areas adjoining the high-pressure side, and the displacement volume of the delivery-valve closing member (21) being matched to the closing characteristic of the valve closing member (57, 157) of the solenoid valve in such a way that a slowing of the increase in fuel pressure on the high-pressure side which speeds up and facilitates the process of closure of the valve closing member is achieved by means of the enlargement in volume on the high-pressure side by the shifting delivery-valve closing member.

2. Fuel injection device according to Claim 1, characterised in that the valve closing member (57, 157) of the electrically controlled valve (55, 155) is a pressure-balanced needle-valve closing member which has an annular sealing face which can be brought to rest by its diameter corresponding to the outermost diameter of a pressure-balancing area against the associated valve seat (58).

3. Fuel injection device according to one of the preceding claims, characterised in that 'a connection is established, in the closing position of the delivery-valve closing member (21), between the pump working space (106) and the injection line (16) leading to the fuel injection valve, at least prior to the beginning of the effective delivery stroke of the pump plunger (103) (Figures 3, 5 and 6).

4. Fuel injection device according to Claim 3, characterised in that a balance line (66) between that part of the injection line (16) which is on the injection-valve side and the pump working space (106) is opened by the pump plunger (106) in its bottom dead centre position (end of the suction stroke) (Figure 4).

5. Fuel injection device according to Claim 3, characterised in that a restrictor connection (67) is provided between the pump working space (106) and the injection-valve side injection line (16), in parallel with the valve seat (17).

6. Fuel injection device according to Claim 3, characterised in that the delivery-valve closing member (21) can be displaced counter to the force of a first spring (22) by a first part-stroke ($h_1$), as far as a first stop (70), which can be displaced counter to a second spring (27) by a second part-stroke ($h_2$), as far as a second stop (71, 76), under the action of the pressure in the pump working space (106) (Figure 6).

7. Fuel injection device according to Claim 6, characterised in that the valve-closing spring (27) of the fuel injection valve serves as the second spring and the first stop (70) is held on a valve head (29) of the valve-closing spring (27) by the first spring (22), which is supported against the delivery-valve closing member (21) (Figure 6).

8. Fuel injection device according to Claim 7, characterised in that the first stop (70) is formed on a step piston (69) which slides with its one part (68) in the guide cylinder (120) and with its other part (72) in an adjoining coaxial bore (74), and the shoulder (76) formed at the transition from the bore (74) to the guide cylinder (120) is designed as second stop for a corresponding shoulder (71) of the step piston (Figure 6).

9. Fuel injection device according to one of the preceding claims, characterised in that the pressure shoulder (23) of the delivery-valve closing member (21) is subjected to the pressure in the injection line (16) between the injection valve and the valve seat (17) of the delivery-valve closing member.

10. Fuel injection device according to Claim 9, characterised in that the pressure acting on the rear side of the delivery-valve closing member (21) can be altered as a function of operating parameters of the internal combustion engine.

11. Fuel injection device according to Claim 10, characterised in that the volume enclosed in the guide cylinder (20, 121) on the rear side of the delivery-valve closing member (21) is connected to the relief side via a restrictor (30), in particular a controllable restrictor.

**Revendications**

1. Dispositif d'injection de carburant pour moteur à combustion interne avec un piston de pompe (3), qui enferme dans un cylindre de pompe (2) une chambre de travail de pompe (6), qui peut être reliée à un injecteur de carburant (9) via une canalisation d'injection de carburant (16) s'étendant en particulier dans un carter (pompe à injection combinée avec l'injecteur) contenant le cylindre de pompe (2) et l'injecteur de carburant (9), dans lequel une section de passage de la canalisation d'injection (16) est délimitée par un siège de soupape (17), avec lequel coopère un organe de fermeture (21) de soupape de refoulement conduit de façon étanche dans un cylindre de guidage (20), dont l'extrémité portant la surface d'étanchéité (19) plonge dans un espace (18) relié à la canalisation d'injection (16), et présente à cet endroit un épaulement de pression (23) et dont la face arrière est comprimée par un ressort de soupape (22) et coopère avec une butée (49) délimitant la course de l'organe de fermeture de la soupape de refoulement et dans lequel le logement de ressort (44) enfermé dans le cylindre de guidage (20) par le côté arrière de l'organe de fermeture (21) de la soupape de refoulement, contenant le ressort de soupape (22) est relié par un canal constamment ouvert (30) à un espace de décharge (14 ; 48 ; 45), dispositif caractérisé en ce que la chambre de travail de la pompe (6, 16) est reliée à un canal de décharge (53) dans lequel est disposée une électrovanne (55, 155) commandée électriquement, dont l'organe de fermeture (57, 157) coopère avec un siège de soupape (58) délimitant une section de passage du canal de décharge (53), de telle sorte que le canal de décharge est relié à une source (45) d'alimentation en carburant, qui lors de la course d'aspiration du piston de pompe (106) est reliée à la chambre de travail (106) de la pompe par le canal de décharge (53) servant ici de canal de remplissage et la vanne (55) commandée électriquement et pendant la phase de décharge de la chambre de travail de la pompe, commandée par la vanne (55) commandée électriquement, pendant la course de refoulement du piston de pompe (103), l'organe de fermeture de soupape (57, 157) étant un organe de commande de course, dont le côté frontal adjacent à la surface d'étanchéité (63) coopérant avec le siège de soupape (58) est soumis à la basse pression de la source (45) d'alimentation en carburant et est essentiellement en équilibre de pression par rapport aux surfaces adjacentes au côté haute pression et le volume de déplacement de l'organe de fermeture de la soupape de refoulement (21) est déterminé en fonction de la caractéristique de fermeture de l'organe de fermeture de soupape (57, 157) de l'électrovanne, de telle sorte que l'on obtient un ralentissement de la montée en pression du carburant du côté haute pression qui accélère et facilite la séquence de fermeture de l'organe de fermeture de soupape au moyen d'une augmentation du volume du côté haute pression par l'organe de fermeture de la soupape de refoulement se déplaçant.

2. Dispositif d'injection de carburant selon la revendication 1, caractérisé en ce que l'organe de fermeture de soupape (57, 157) de la vanne commandée électriquement (55, 155) est un organe de fermeture de soupape à pointeau à pression équilibrée, qui présente une surface d'étanchéité annulaire, qui peut venir en contact avec le siège de soupape (58) correspondant par son diamètre correspondant au diamètre le plus extérieur d'une surface d'équilibrage de pression.

3. Dispositif d'injection de carburant selon l'une des revendications précédentes, caractérisé en ce que, dans la position de fermeture de l'organe de fermeture (21) de la soupape de refoulement il est établi une liaison entre la chambre de travail (106) de la pompe et la canalisation (16) d'injection conduisant à l'injecteur de carburant, au moins avant le début de la course de refoulement efficace du piston de pompe (103). (figures 3, 5 et 6).

4. Dispositif d'injection de carburant selon la revendication 3, caractérisé en ce qu'une canalisation (66) d'équilibrage située entre la partie de la canalisation d'injection (16) qui est du côté de l'injecteur et la chambre de travail (106) de la pompe est commandée par le piston de pompe (106) dans sa position de point mort bas (fin de la course d'aspiration) (figure 4).

5. Dispositif d'injection de carburant selon la revendication 3, caractérisé en ce qu'entre la chambre de travail (106) de la pompe et la canalisation d'injection (16) du côté de l'injecteur, il est prévu une liaison (67) avec étranglement parallèlement au siège de soupape (17).

6. Dispositif d'injection de carburant selon la revendication 3, caractérisé en ce que l'organe de fermeture (21) de la soupape de refoulement peut être déplace, à l'encontre de la force d'un premier ressort (22), d'une première course partielle ($h_1$) jusqu'à une première butée (70), qui peut être déplacée à l'encontre d'un deuxième ressort (27) d'une deuxième course partielle ($h_2$) jusqu'à une deuxième butée (71, 76) sous l'action de la pression dans la chambre de travail (106) de la pompe (figure 6).

7. Dispositif d'injection de carburant selon la revendication 6, caractérisé en ce que le ressort de fermeture de soupape (27) de l'injecteur de carburant sert de deuxième ressort et la première butée (70) est maintenue sur une tête de soupape (29) du ressort de fermeture de soupape (27) par le premier ressort (22), qui s'appuie sur l'organe de fermeture (21) de la soupape de refoulement (figure 6).

8. Dispositif d'injection de carburant selon la revendication 7, caractérisé en ce que la première butée (70) est formée sur un piston à étages (69) qui coulisse par sa première partie (68) dans le cylindre de guidage (120) et par son autre partie (72) coulisse dans un alésage (74) s'étendant coaxialement de façon adjacente et en ce que l'épaulement (76) formé au passage de l'alésage (74) vers le cylindre de guidage (120) sert de deuxième butée pour un épaulement correspondant (71) du piston à étages (figure 6).

9. Dispositif d'injection de carburant selon l'une des revendications précédentes, caractérisé en ce que l'epaulement de pression (23) de l'organe de fermeture (21) de la soupape de refoulement est soumis à la pression régnant dans la canalisation (16) d'injection entre l'injecteur et le siège de soupape (17) de l'organe de fermeture de la soupape de refoulement.

**10.** Dispositif d'injection de carburant selon la revendication 9, caractérisé en ce que la pression qui agit sur le côté arrière de l'organe de fermeture (21) de la soupape de refoulement peut varier en fonction des paramètres de fonctionnement du moteur à combustion interne.

**11.** Dispositif d'injection de carburant selon la revendication 10, caractérisé en ce que le volume enfermé dans le cylindre de guidage (20, 121) sur le côté arrière de l'organe de fermeture (21) de la soupape de refoulement est relié avec le côté décharge par un étranglement (30) en particulier commandable.

FIG. 1

FIG. 2

FIG. 3

FIG. 4

FIG. 5

# FIG. 6